(19) Europäisches Patentamt
European Patent Office
Office européen des brevets

(11) EP 2 617 760 A1

(12) **EUROPEAN PATENT APPLICATION**
published in accordance with Art. 153(4) EPC

(43) Date of publication:
**24.07.2013 Bulletin 2013/30**

(21) Application number: **11825040.6**

(22) Date of filing: **07.09.2011**

(51) Int Cl.:
***C08J 9/36*** *(2006.01)* ***B01J 20/26*** *(2006.01)*
***B01J 20/30*** *(2006.01)* ***C08J 9/28*** *(2006.01)*

(86) International application number:
**PCT/JP2011/070334**

(87) International publication number:
**WO 2012/036034 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2010 JP 2010205571**

(71) Applicants:
- **Osaka University**
  **Suita-shi, Osaka 565-0871 (JP)**
- **Kaneka Corporation**
  **Osaka 530-8288 (JP)**

(72) Inventors:
- **UYAMA Hiroshi**
  **Osaka 565-0871 (JP)**
- **TSUJIMOTO Takashi**
  **Osaka 565-0871 (JP)**
- **OKADA Keisuke**
  **Osaka 565-0871 (JP)**
- **INOUE Kenji**
  **Osaka 530-8288 (JP)**

(74) Representative: **TBK**
**Bavariaring 4-6**
**80336 München (DE)**

# (54) AMIDOXIME-MODIFIED POLYACRYLONITRILE POROUS MEDIUM

(57) An amidoxime-modified PAN porous body obtained by reacting with hydroxylamine a polyacrylonitrile porous body that is monolithic, has a thickness of 1 mm or more and contains polyacrylonitrile (PAN) as the main component to convert a nitrile group of the polyacrylonitrile porous body into an amidoxime group. This porous body is a porous body for adsorbing a metal ion, for example, an ion of metal such as copper, iron, nickel, vanadium, indium, gallium, silver, mercury, lead, uranium, plutonium, cesium, barium, lanthanum, thallium and strontium.

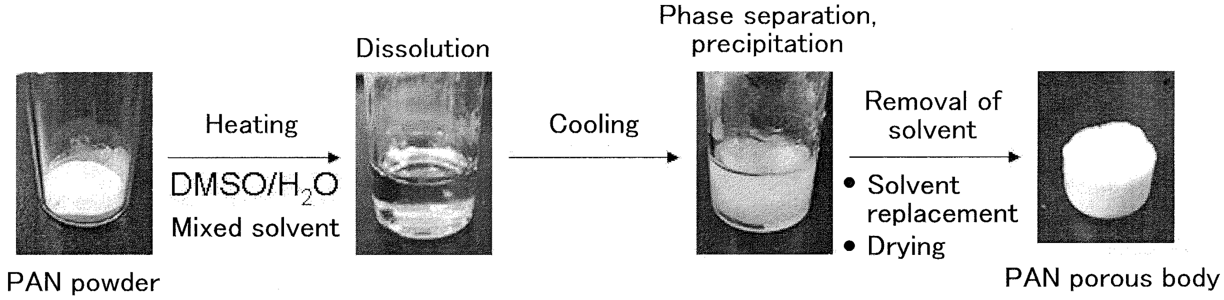


FIG. 1

EP 2 617 760 A1

**Description**

Technical Field

The present invention relates to an amidoxime-modified polyacrylonitrile porous body that is monolithic and has a certain thickness, a method for producing the amidoxime-modified polyacrylonitrile porous body and a metal adsorption method using the amidoxime-modified polyacrylonitrile porous body.

Background Art

Resins having various metal adsorption capabilities are used in removing metals from wastewater and in mining and recycling of rare metals. Therefore, resins that are readily producible and have excellent performance, such as a high metal adsorption capability, are desired. Typically, a metal adsorbing resin adsorbs metal through a chelating group on the resin. It is known that resins having an amidoxime group as a chelating group have a high metal adsorption capability.

On the other hand, porous bodies are widely used in a variety of fields as separating agents, adsorbents, and the like. Regarding inorganic porous bodies, extensive research has been carried out on silica-based porous bodies. Techniques to produce porous silica particles among silica-based porous bodies have been generally researched. Such porous silica particles are in practical use as analytical materials. On the other hand, regarding polymeric porous bodies, techniques to obtain porous bodies by adding a suitable diluting agent during suspension polymerization of a vinyl monomer are known. Taking advantage of lightweight properties of polymeric materials, such polymeric porous bodies are in practical use as various adsorbents and separating agents.

A mass of a material having a complex structure formed of a continuous skeleton and voids is called a monolith. Regarding silica-based porous bodies, a technique to produce a monolith having a certain thickness is known. Regarding polymeric porous bodies, a synthesizing technique by a polymerization method has been reported for a vinyl polymer monolith, but it is not yet in practical use as a separating material because of, for example, difficulties in controlling the structure.

As a polymeric material, polyacrylonitrile (hereinafter referred to as PAN) is widely used as a component of clothing, packaging materials, separation membranes, and the like. PAN has excellent solvent resistance and strength, and known methods for producing porous bodies using PAN as an ingredient include a method for producing a porous film composed of a resin composition that partially contains PAN (e.g., Patent Document 1) and a method for producing a PAN porous body in which a dope prepared from an organic solvent in which PAN has been dissolved is solidified using a coagulation bath of a solution composed of the organic solvent and a PAN solidifying agent (e.g., Patent Document 2). The known methods also include a method for producing PAN porous body particles by dispersion polymerization using acrylonitrile as a dispersion stabilizer, N- vinylpyrrolidone and the like (e.g., Patent Document 3).

However, the porous bodies obtained by these known techniques are in the form of a film (e.g., fiber) with a small thickness or in the form of particles. Thus, no method for producing a porous body that is monolithic, has a certain thickness and contains PAN as the main component has been known.

On the other hand, it has been known conventionally that amidoxime group-containing acrylonitrile copolymers have a metal adsorption capability. Known methods for producing such amidoxime group-containing acrylonitrile copolymers having a metal adsorption capability include, for example, a method including producing particles of an acrylonitrile-methyl acrylate copolymer by suspension polymerization and converting a nitrile group of the copolymer into an amidoxime group using hydroxylamine hydrochloride to obtain an amidoxime group-containing acrylonitrile copolymer (e.g., Non-Patent Document 1).

However, obtaining an amidoxime-modified PAN porous body by converting a nitrile group of a monolithic porous body that contains PAN as the main component into an amidoxime group and use of the obtained porous body as a metal adsorbent have not been known.

Prior Art Documents

Patent Documents

Patent Document 1: JP 2002-194133 A
Patent Document 2: JP H8(1996)-22934 B
Patent Document 3: JP H4(1992)-261404 A

Non-Patent Document

Non-Patent Document 1: Liu, Xin et al., Journal of Hazardous Materials, 2010, vol. 175, pp. 1014-1021

Disclosure of Invention

Problem to be Solved by the Invention

It is important that metal adsorbents show a high metal adsorption capability even when processing a metal solution at high speed. Conventionally-known amidoxime group-containing acrylonitrile copolymers presented a problem in their metal adsorption capability in high speed processing. Therefore, a metal adsorbent having a high metal adsorption capability even in high speed processing has been desired.

It is an object of the present invention to provide an amidoxime-modified polyacrylonitrile porous body that is monolithic and has a certain thickness, a method for producing the amidoxime-modified polyacrylonitrile porous body and a metal adsorption method using the amidoxime-modified polyacrylonitrile porous body, which shows a high metal adsorption capability even in high speed processing.

Means for Solving Problem

The present invention is directed to an amidoxime-modified PAN porous body (hereinafter sometimes referred to as a "PAN-oxime porous body") obtained by reacting with hydroxylamine a PAN porous body that is monolithic, has a thickness of 1 mm or more and contains polyacrylonitrile (PAN) as the main component to convert part of a nitrile group of the PAN porous body into an amidoxime group. The term "containing PAN as the main component" as used herein means that PAN accounts for 50 wt% or more of the entire porous body. As described above, the PAN-oxime porous body of the present invention is a porous body that is obtained without crosslinking PAN.

The present invention is also directed to a method for producing the amidoxime-modified PAN porous body. The method includes the step of reacting with hydroxylamine a PAN porous body that is monolithic, has a thickness of 1 mm or more and contains PAN as the main component to convert part of a nitrile group of the polyacrylonitrile porous body into an amidoxime group.

The present invention is also directed to a metal adsorption method for adsorbing a metal ion and an iodine ion and iodine using the amidoxime-modified PAN porous body.

Effects of the Invention

According to the present invention, it is possible to provide an amidoxime-modified PAN porous body that is monolithic and has a certain thickness, a method for producing the amidoxime-modified PAN porous body and a metal adsorption method using the amidoxime-modified PAN porous body, which shows a high metal adsorption capability even in high speed processing.

Brief Description of Drawings

[FIG. 1] FIG. 1 is a diagram for explaining steps in Example 1 (1).
[FIG. 2] FIG. 2 is a SEM micrograph of a PAN porous body obtained in Example 1 (1).
[FIG. 3] FIG. 3 is a SEM micrograph of a PAN-oxime porous body obtained in Example 1 (2).
[FIG. 4] FIG. 4 is the IR spectrum of the PAN-oxime porous body obtained in Example 1 (2).

Description of the Invention

In the amidoxime-modified PAN porous body of the present invention, it is preferable that the PAN porous body that is monolithic, has a thickness of 1 mm or more and contains PAN as the main component is obtained by a method including the steps of:

obtaining a PAN solution by heating and dissolving PAN in a solvent;
obtaining a product precipitated by cooling the PAN solution, and
obtaining the PAN porous body that is monolithic, has a thickness of 1 mm or more and contains PAN as the main component by immersing the product in a different solvent to replace the solvent with the different solvent,

the solvent containing a poor solvent for polyacrylonitrile and a good solvent for polyacrylonitrile,
the poor solvent being one or more selected from the group consisting of water, acetonitrile, ethylene glycol, methanol, ethanol, isopropanol, ethylene glycol and glycerin, and
the good solvent being one or more selected from the group consisting of dimethyl sulfoxide, dimethyl formamide, dimethyl acetamide and N-methyl-pyrrolidone.

The amidoxime-modified PAN porous body of the present invention is preferably an amidoxime-modified PAN porous body in which an amount of nitrile group amidoximized is 0.1 to 20 mmol per g of the amidoxime-modified PAN porous body.

It is preferable that the amidoxime-modified PAN porous body of the present invention has pores having a pore diameter of 0.1 to 15 μm, the pores have a skeletal diameter of 0.05 to 8 μm, and the amidoxime-modified PAN porous body has a thickness of 1 mm or more and a BET area of 5 to 800 $m^2/g$.

It is preferable that the infrared absorption spectrum of the amidoxime-modified PAN porous body of the present invention satisfies the following formula. The peak of the infrared absorption spectrum at 2262 $cm^{-1}$ is a peak of nitrile group of PAN and the peak of the infrared absorption spectrum at 1652 $cm^{-1}$ is a peak of amidoxime group of the amidoxime-modified PAN. Thus, (B) / (A) expresses the ratio between the nitrile group and the amidoxime group of the amidoxime-modified PAN porous body. The larger the ratio, the higher the degree of amidoxime modification is.

$$1.2 \leq (B) / (A) \leq 500$$

Where (A) indicates the peak height of the infrared absorption spectrum of the amidoxime-modified polyacrylonitrile porous body at 2262 $cm^{-1}$, and (B) indicates the peak height of the infrared absorption spectrum of the amidoxime-modified polyacrylonitrile porous body at 1652 $cm^{-1}$.

$$(B) / (A) \text{ above is more preferably } 1.5 \leq (B) / (A) \leq 300.$$

The amidoxime-modified PAN porous body of the present invention is an amidoxime-modified PAN porous body for adsorbing a metal ion, preferably an ion of metal such as copper (e.g., copper(II) ion), iron (e.g., iron(II) ion), nickel (e.g., nickel(II) ion), vanadium (e.g., vanadium(V) ion), indium, gallium, mercury, silver, lead, uranium, plutonium, cesium, barium, lanthanum, thallium and strontium, and an iodine ion and iodine. An adsorption amount of metal ion and iodine ion per g of the amidoxime-modified PAN porous body of the present invention is, for example, 0.2 to 10 (ion mmol / g of porous body), and preferably 1 to 7 (ion mmol / g of porous body). Further, an adsorption amount of iodine per g of the amidoxime-modified PAN porous body is, for example, 0.2 to 10 (iodine mmol / g of porous body), and preferably 1 to 7 (iodine mmol / g of porous body).

The present invention also provides a column for adsorbing a metal ion, preferably an ion of metal selected from the group consisting of copper (e.g., copper(II) ion), iron (e.g., iron(II) ion), nickel (e.g., nickel(II) ion), vanadium (e.g., vanadium(V) ion), indium, gallium, mercury, silver, lead, uranium, plutonium, cesium, barium, lanthanum, thallium and strontium, and an iodine ion and iodine, the column being filled with the amidoxime-modified PAN porous body of the present invention.

The present invention is also directed to a metal adsorption method for adsorbing a metal ion, preferably an ion of metal selected from the group consisting of copper (e.g., copper(II) ion), iron (e.g., iron(II) ion), nickel (e.g., nickel (II) ion), vanadium (e.g., vanadium(V) ion), indium, gallium, mercury, silver, lead, uranium, plutonium, cesium, barium, lanthanum, thallium and strontium, and an iodine ion and iodine, the metal adsorption method using the amidoxime-modified PAN porous body of the present invention. An adsorption amount of metal ion and iodine ion per g of the amidoxime-modified PAN porous body of the present invention is, for example, 0.2 to 10 (ion mmol / g of porous body), and preferably 1 to 7 (ion mmol / g of porous body). Further, an adsorption amount of iodine per g of the amidoxime-modified PAN porous body is, for example, 0.2 to 10 (iodine mmol / g of porous body), and preferably 1 to 7 (iodine mmol / g of porous body).

As described above, the method for producing the amidoxime-modified PAN porous body of the present invention includes the step of reacting with hydroxylamine a PAN porous body that is monolithic, has a thickness of 1 mm or more and contains PAN as the main component to convert a nitrile group of the PAN porous body into an amidoxime group. In this step, for example, 0.05 to 5 equivalents, preferably 0.1 to 4 equivalents of hydroxylamine is used in relation to the PAN porous body. When hydroxylamine is in the form of a salt, it is preferable to neutralize the hydroxylamine in this step to use it in the form of free amine. This step can be carried out by mixing the PAN porous body and the hydroxylamine in a solvent and heating them at, for example, 40 to 100°C for 1 to 24 hours. As the solvent, alcohol such

as methanol or ethanol, dimethyl formamide (DMF), dimethyl acetamide (DNAc), or N-methyl-pyrrolidone (NMP) can be used. After the heating, the obtained PAN-oxime porous body may be shaken in water, alcohol such as methanol or ethanol, DMF, DMAc, or NMP to be cleaned. Further, after being heated and/or cleaned, the obtained PAN-oxime porous body may be dried at a temperature such as room temperature under a normal pressure, vacuum or the like.

In the method for producing the amidoxime-modified PAN porous body of the present invention, the PAN porous body as a starting material that is monolithic, has a thickness of 1 mm or more and contains PAN as the main component is preferably produced by a method including the steps of: obtaining a PAN solution by heating and dissolving PAN in a solvent; obtaining a product precipitated by cooling the PAN solution, and obtaining the porous body containing PAN as the main component by immersing the product in a different solvent to replace the solvent with the different solvent, as described above (hereinafter referred to as the "production example of the PAN porous body").

In the production example of the PAN porous body, it is preferable that the porous body is obtained by a method in which the solvent contains a poor solvent for PAN and a good solvent for PAN, the poor solvent is one or more selected from the group consisting of water, acetonitrile, ethylene glycol, methanol, ethanol, isopropanol, ethylene glycol and glycerin, and the good solvent is one or more selected from the group consisting of dimethyl sulfoxide, dimethyl formamide, dimethyl acetamide and N-methyl-pyrrolidone.

The PAN porous body (starting material) according to the present invention is monolithic and is thicker than a film. The shape of the porous body is not limited. Of thee directions, the length, the width, the height, of the porous body, the shortest direction is referred to as the thickness for the sake of convenience. As described above, the thickness of the PAN porous body of the present invention is 1 mm or more, preferably 1.5 mm or more, and more preferably 2 mm or more. The PAN porous body (starting material) according to the present invention has pores having a pore diameter of, for example, 0.1 to 15 μm, the pores have a skeletal diameter of, for example, 0.05 to 8 μm, and the PAN porous body has a thickness of 1 mm or more and a BET area of 5 to 800 $m^2/g$. It is preferable that the PAN porous body has pores having a pore diameter of 0.3 to 10 μm, the pores have a skeletal diameter of 0.1 to 5 μm, and the porous body has a thickness of 1.5 mm or more and a BET area of 20 to 800 $m^2/g$. The pore diameter is preferably 0.3 to 10 μm, and more preferably 0.5 to 5 μm. Further, the skeletal diameter of the pores is preferably 0.1 to 5 μm, and more preferably 0.2 to 3 μm. The BET specific surface area of the polyacrylonitrile porous body (starting material) according to the present invention is preferably 20 to 800 $m^2/g$, and more preferably 50 to 500 $m^2/g$. To be more specific, the BET specific surface area can be measured by a method described in Examples. The pore diameter and the skeletal diameter can be obtained from an image taken with a scanning electron microscope.

In the production example of the PAN porous body, the molecular weight of PAN is not limited but the average molecular weight is, for example, 10,000 to 5,000,000, preferably 20,000 to 4,000,000, and more preferably 30,000 to 3,000,000.

As described above, in the production example of the PAN porous body, a PAN solution is obtained by heating and dissolving PAN in the solvent. The heating temperature is, for example, 70 to 95°C and preferably 70 to 90°C. PAN may be dissolved in the solvent while receiving a physical stimulus. Examples of the physical stimulus include stirring, shaking, ultrasonication, and the like.

As described above, in the production example of the PAN porous body, the solvent preferably contains a poor solvent for PAN and a good solvent for PAN. The poor solvent for PAN is, for example, one or more selected from the group consisting of water, acetonitrile, ethylene glycol, methanol, ethanol, isopropanol, ethylene glycol and glycerin, and preferably is one or more selected from the group consisting of water, acetonitrile, and ethylene glycol. Further, the good solvent for PAN is, for example, one or more selected from the group consisting of dimethyl sulfoxide, dimethyl formamide, dimethyl acetamide and N-methyl-pyrrolidone, and preferably is one or more selected from the group consisting of dimethyl sulfoxide and dimethyl formamide. Each of the poor solvent for PAN and the good solvent for PAN may be a mixture of one or more solvents. In the production example of the PAN porous body, the poor solvent refers to a solvent that is less capable of dissolving PAN. Specifically, the poor solvent means that 1 g or more, preferably 0.8 g or more, and more preferably 0.5 g or more of PAN does not dissolve in 1L of the poor solvent. Further, in the production example of the PAN porous body, the good solvent refers to a solvent that is highly capable of dissolving PAN. Specifically, the good solvent means that 10 g or more, preferably 15 g or more, and more preferably 20 g or more of PAN dissolves in 1L of the good solvent.

In the production example of the PAN porous body, the solvent when being 100 vol% has a good solvent content of, for example, 10 to 95 vol%, preferably 20 to 90 vol%, and more preferably 80 to 90 vol%.

Further, in the production example of the PAN porous body, the PAN solution has a PAN concentration of, for example, 40 to 300 mg/ml, preferably 50 to 200 mg/ml, and more preferably 60 to 200 mg/ml.

In the production example of the PAN porous body, next, a product precipitated by cooling the PAN solution is obtained. The cooling temperature is, for example, -20 to 60°C, preferably -5 to 45°C, and more preferably -5 to 40°C. The cooling time is, for example, 1 minute to 24 hours, preferably 1 minute to 1.5 hours, and more preferably 2 minutes to 1 hour.

In the production example of the PAN porous body, next, the porous body containing PAN as the main component

is obtained by immersing the product in a different solvent to replace the solvent with the different solvent.

In the production example of the PAN porous body, the different solvent is preferably one or more selected from the group consisting of water, lower alcohols, acetone, and acetonitrile, and more preferably water, methanol, acetone, and acetonitrile. In the production example of the PAN porous body, examples of the lower alcohols include $C_{1-6}$ lower alcohols such as methanol, ethanol, n-propanol, i-propanol, n-butanol, 2-butanol, 1-butanol, t-butanol, n-pentanol, t-amyl alcohol, and n-hexanol.

In the production example of the PAN porous body, after the solvent is replaced with the different solvent, the obtained product may be dried to obtain a porous body. Drying is carried out at, for example, 0 to 90°C and preferably 0 to 80°C. Further, drying is carried out, for example, under a reduced pressure to normal pressure and preferably under a reduced pressure. Further, drying may be carried out in the form of freeze drying.

In the PAN-oxime porous body of the present invention, the amount of nitrile group amidoximized is, for example, 0.1 to 20 mmol, preferably 0.5 to 12 mmol, and more preferably 1 to 12 mmol per g of the PAN-oxime porous body.

The amidoxime-modified PAN porous body of the present invention is monolithic and is thicker than a film. The shape of the porous body is not limited. Of thee directions, the length, the width, the height, of the porous body, the shortest direction is referred to as the thickness for the sake of convenience. As described above, the thickness of the amidoxime-modified PAN porous body of the present invention is 1 mm or more, preferably 1.5 mm or more, and more preferably 2 mm or more.

The amidoxime-modified PAN porous body of the present invention has pores having a pore diameter of, for example, 0.1 to 15 μm, the pores have a skeletal diameter of 0.05 to 8 μm, and the porous body has a thickness of 1 mm or more and a BET area of 5 to 800 $m^2/g$. It is preferable that the PAN-oxime porous body has pores having a pore diameter of 0.3 to 10 μm, the pores have a skeletal diameter of 0.1 to 5 μm, and the porous body has a thickness of 1.5 mm or more and a BET area of 20 to 800 $m^2/g$. The pore diameter is preferably 0.3 to 10 μm, and more preferably 0.5 to 5 μm. Further, the skeletal diameter of the pores is preferably 0.1 to 5 μm, and more preferably 0.2 to 3 μm. Further, the thickness of the porous body is preferably 1.5 mm or more, and more preferably 2 mm or more. The BET area is preferably 20 to 800 $m^2/g$, and more preferably 50 to 500 $m^2/g$. To be more specific, the BET specific surface area can be measured by a method described in Examples. Such a porous body can be used as, for example, filters, adsorbents, and the like. The pore diameter and the skeletal diameter can be obtained from an image taken with a scanning electron microscope.

The present invention shall be described in more detail below by way of Examples, but the scope of the present invention is not limited to Examples below. The following abbreviations are used herein.

PAN: polyacrylonitrile

DMSO: dimethyl sulfoxide

The following measuring instruments were used herein.

Scanning electron microscope: Hitachi S-3000N (manufactured by Hitachi High-Technologies Corporation)

BET: Micromeritics Tristar 3000 (manufactured by Shimadzu Corporation)

IPC emission spectrometry: trade name: ICPS-7510 (manufactured by Shimadzu Corporation)

Infrared spectrometer: trade name: Spectrum One FT-IR Fourier transform infrared spectrometer (manufactured by PerkinElmer Japan Co., Ltd)

Herein, the pore diameter and the skeletal diameter were obtained from an image taken with a scanning electron microscope (SEM).

Example 1

(1) Production of Monolithic PAN Porous Body (Starting Material) with Thickness of 1 mm or more

PAN (average molecular weight Mw = 150,000) was added to a DMSO/$H_2O$ (88/12 vol%) mixed solvent in a concentration of 100 g/ml and stirred at 75°C. After complete dissolution, the stirring bar was removed and the mixture was left to stand still in a water bath at 0°C for 60 minutes. Phase separation occurred after cooling, thus giving a product having the shape of a sample tube (cylindrical shape) (see FIG. 1). This product was immersed in methanol (different solvent) and shaken in a bioshaker at 20°C for 24 hours. Methanol was changed 3 times in 24 hours to replace DMSO and water of the solvent with methanol. Thereafter, reduced pressure drying was carried out at room temperature for 4 hours to remove methanol, thus giving a PAN porous body (dimensions: a substantially cylindrical shape having a diameter of 15 mm and a thickness of 15 mm).

<SEM observation>

Sputtering was performed on the obtained PAN porous body for 150 s at a discharge current of 15.0 mA, and then SEM observation was carried out at an applied voltage of 15.0 to 25.0 kV

FIG. 2 shows a SEM micrograph of the obtained PAN porous body. As shown in FIG. 2, it was confirmed that the PAN porous body was a porous body having a co-continuous structure, with the skeletal diameter being 0.45 to 0.87 μm and the pore diameter being 0.79 to 2.59 μm. Note that it was possible to infer that the pores had a co-continuous structure due to the fact that the shapes of the pores were identical or similar on SEM micrographs of multiple porous body samples.

<BET Specific Surface Area Measurement>

The obtain PAN porous body was degassed in a nitrogen stream at 60°C for 40 minutes using a sample degassing apparatus, and then the specific surface area was measured by the BET three-point method. The specific surface area of the obtained PAN porous body obtained by the BET method was 223 $m^2/g$. It was confirmed from this value that the obtained PAN porous body was a porous body that had a sufficiently large specific surface area.

(2) Amidoxime-Modification of PAN Porous Body

To a methanol (15 mL) solution of hydroxylamine hydrochloride (0.834 g, 12.0 mmol), sodium hydroxide (0.480 g, 12.0 mmol) was added to neutralize the hydrochloride. Precipitated sodium chloride was removed by filtering, and methanol (15 mL) was added to the obtained filtrate to prepare a methanol solution of 0.40 M hydroxylamine.

To the methanol solution of 0.40 M hydroxylamine (6.0 mL (1 equivalent in relation to the nitrile group in the PAN porous body)), the PAN porous body (0.127 g, containing 2.39 mmol of CN group, dimensions: a substantially cylindrical shape having a diameter of 15 mm and a thickness of 15 mm) obtained in (1) was added. The mixture was refluxed by heating at 70°C for 4 hours to amidoximize the nitrile group on and in the vicinity of the surface of the porous body (see Scheme 1). After the heating, the obtained porous body was shaken in water (large excess) for 24 hours to be cleaned. Next, the porous body was shaken in methanol (large excess) for 24 hours to be cleaned. Finally, the porous body was dried in a vacuum at room temperature, thus obtaining a PAN-oxime porous body. The mass of the obtained PAN-oxime porous body increased by 29.8% and the introduction rate of amidoxime group was 6.51 mmol / (g of porous body).

<SEM observation>

Sputtering was performed on the obtained PAN-oxime porous body for 150 s at a discharge current of 15.0 mA, and then SEM observation was carried out at an applied voltage of 15.0 to 25.0 kV

FIG. 3 shows a SEM micrograph of the obtained porous body. As shown in FIG. 3, it was confirmed that the PAN-oxime porous body also was a porous body having a co-continuous structure, with the skeletal diameter being 0.35 to 0.93 μm and the pore diameter being 0.97 to 2.19 μm. Note that it was possible to infer that the pores had a co-continuous structure due to the fact that the shapes of the pores were identical or similar on SEM micrographs of a plurality of PAN-oxime porous body samples.

<Infrared Absorption Spectrum Measurement>

Also from the fact that the peak derived from the nitrile group declined and, instead, the peak derived from amidoxime appeared in the IR spectrum (infrared absorption spectrum) of the obtained porous body, it was confirmed that the amidoximization proceeded (see Table 4). (B) / (A) of the obtained PAN-oxime porous body was 5.5, where (A) indicates the peak height of the infrared absorption spectrum of the PAN-oxime porous body at 2262 $cm^{-1}$ and (B) indicates the peak height of the infrared absorption spectrum of the PAN-oxime porous body at 1652 $cm^{-1}$.

<BET Specific Surface Area Measurement>

The obtain PAN-oxime porous body was degassed in a nitrogen stream at 60°C for 40 minutes using a sample degassing apparatus, and then the specific surface area was measured by the BET three-point method. The specific surface area of the obtained PAN-oxime porous body obtained by the BET method was 133 $m^2/g$. It was confirmed from this value that the obtained PAN-oxime porous body was a porous body that had a sufficiently large specific surface area.

[Chemical Formula 1]

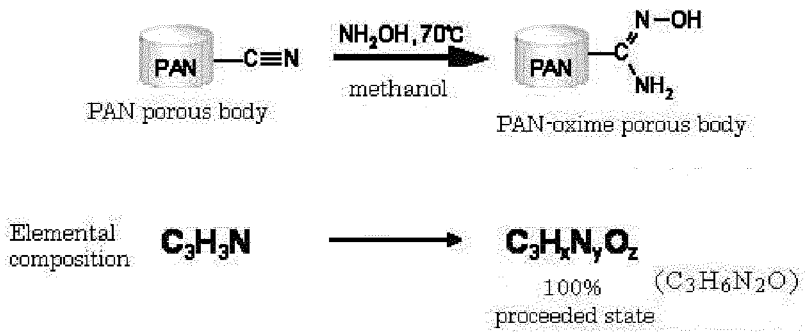


Example 2

A PAN-oxime porous body was obtained in the same manner as in Example 1 except that a methanol solution of 1.2 M hydroxylamine (3 equivalents in relation to the nitrile group in the PAN porous body) was used in place of the methanol solution of 0.40 M hydroxylamine and the reaction time was changed from 4 hours to 6 hours. The mass of the obtained PAN-oxime porous body increased by 49.5%, the introduction rate of amidoxime group was 10.03 mmol / (g of porous body), the specific surface area obtained by the BET method was 95 $m^2/g$, and (B) / (A) of the obtained PAN-oxime porous body was 194.

Example 3

A PAN-oxime porous body was obtained in the same manner as in Example 1 except that a methanol solution of 0.1 M hydroxylamine (0.25 equivalents in relation to the nitrile group in the PAN porous body) was used in place of the methanol solution of 0.40 M hydroxylamine and the reaction time was changed from 4 hours to 6 hours. The mass of the obtained PAN-oxime porous body increased by 13.3%, the introduction rate of amidoxime group was 3.51 mmol / (g of porous body), the specific surface area obtained by the BET method was 190 $m^2/g$, and (B) / (A) of the obtained PAN-oxime porous body was 2.0.

[TABLE 1]

Table 1-1: reaction conditions

| | Concentration of hydroxylamine in methanol solution | Equivalents in relation to nitrile group in PAN porous body | Reaction time (hour) |
|---|---|---|---|
| Example 1 | 0.4 M | 1 equivalent | 4 |
| Example 2 | 1.2 M | 3 equivalents | 6 |
| Example 3 | 0.1 M | 0.25 equivalents | 6 |

Table 1-2: obtained products

| | Increase in mass (%) | Element ratio of nitrogen in amidoximized porous body | Introduction rate of amidoxime group (mmol / (g of porous body)) | (B)/(A) |
|---|---|---|---|---|
| Example 1 | 29.8 | 1.32 | 6.51 | 5.5 |
| Example 2 | 49.5 | 1.60 | 10.03 | 194 |
| Example 3 | 13.3 | 1.12 | 3.51 | 2.0 |

From the results shown in Table 1, it was confirmed that the porous bodies obtained in Examples 1 to 3 were PAN-oxime porous bodies.

<Measurement of Adsorption Amount of Metal Ion by Batch Method>

(1) Measurement of Adsorption Amount of Copper(II) Ion

(a) The PAN-oxime porous body (10.8 mg) obtained in Example 2 was stirred in a copper(II) sulfate pentahydrate aqueous solution (10 mmol/L, 10 mL, pH 5, 0.1 M acetate buffer solution) at room temperature for 24 hours. The absorbance of the stirred solution at 765 nm was measured. From the obtained absorbance, a change in the concentration of the copper(II) sulfate pentahydrate aqueous solution was calculated. From the difference in the concentration of the copper(II) sulfate pentahydrate aqueous solution between before and after the stirring, the amount of copper(II) ion adsorbed by the PAN-oxime porous body was calculated.

(b) A change in the concentration of the stirred copper(II) sulfate pentahydrate aqueous solution was calculated in the same manner as in (1)(a) above except for using the PAN-oxime porous body obtained in Example 1 or 3 in place of the PAN-oxime porous body obtained in Example 2. From the difference in the concentration of the copper(II) sulfate pentahydrate aqueous solution between before and after the stirring, the amount of copper(II) ion adsorbed by the PAN-oxime porous body was calculated.

(c) A change in the concentration of the stirred copper(II) sulfate pentahydrate aqueous solution was calculated in the same manner as in (1)(a) above except for using the PAN porous body prepared in Example 1(1) in place of the amidoximized PAN porous body obtained in Example 2. From the difference in the concentration of the copper(II) sulfate pentahydrate aqueous solution between before and after the stirring, the amount of copper(II) ion adsorbed by the PAN-oxime porous body was calculated. This example will be referred to as Reference Example 1. Table 2 provides the results obtained in (a) to (c).

[TABLE 2]

| | Introduction rate of amidoxime group (mmol / g of porous body) | Adsorption Amount of copper (II) ion (mmol / g of porous body) |
|---|---|---|
| Example 1 | 6.51 | 2.05 |
| Example 2 | 10.03 | 5.14 |
| Example 3 | 3.51 | 2.03 |
| Reference Example 1 | 0 | 0 |

As shown in Table 2, it was confirmed that the PAN-oxime porous body of the present invention had a capability of adsorbing a copper(II) ion.

(2) Measurement of Adsorption Amount of Iron(III) Ion

The PAN-oxime porous body (9.4 mg) obtained in Example 2 was stirred in an iron(III) chloride hexahydrate aqueous solution (10 mmol/L, 10 mL, pH 5, 0.1 M acetate buffer solution) at room temperature for 24 hours. The absorbance of the stirred solution at 479.5 nm was measured. From the obtained absorbance, a change in the concentration of the iron(III) chloride hexahydrate aqueous solution was calculated. From the difference in the concentration of the iron(III) chloride hexahydrate aqueous solution between before and after the stirring, the amount of iron(III) ion adsorbed by the PAN-oxime porous body was calculated. Table 3 provides the obtained results.

(3) Measurement of Adsorption Amount of Nickel(II) Ion

The PAN-oxime porous body (9.8 mg) obtained in Example 2 was stirred in a nickel(II) sulfite hexahydrate aqueous solution (50 mmol/L, 10 mL, pH 5, 0.1 M acetate buffer solution) at room temperature for 24 hours. The porous body was taken out from the nickel(II) sulfite hexahydrate aqueous solution and then was immersed in hydrochloric acid (1.0 mmol/L, 5mL) for 24 hours. The amount of nickel(II) ion eluted in the hydrochloric acid from the porous body was measured by ICP emission spectrometry. The amount of nickel(II) ion eluted corresponds to the amount of nickel(II) ion adsorbed by the porous body. Table 3 provides the obtained results.

(3) Measurement of Adsorption Amount of Vanadium(V) Ion

The PAN-oxime porous body (11.9 mg) obtained in Example 2 was stirred in a sodium orthovanadate(V) aqueous solution (10 mmol/L, 10 mL, pH 5, 0.1 M acetate buffer solution) at room temperature for 24 hours. The absorbance of the stirred solution at 430.0 nm was measured. From the obtained absorbance, a change in the concentration of the sodium orthovanadate(V) aqueous solution was calculated. From the difference in the concentration of the sodium orthovanadate(V) aqueous solution before and after the stirring, the amount of vanadium(V) ion adsorbed by the PAN-oxime porous body was calculated. Table 3 provides the obtained results.

[TABLE 3]

| | Adsorption Amount of metal ion per unit weight of porous body (mmol / g) |
|---|---|
| Cu(II) | 5.14 |
| Fe(III) | 3.94 |
| Ni(II) | 1.23 |
| V(V) | 3.57 |

As shown in Table 3, it was confirmed that the PAN-oxime porous body of the present invention had a capability of adsorbing a copper(II) ion, an iron(III) ion and a vanadium(V) ion.

(5) Comparison with Commercially Available Chelating Resin in Adsorption Amount of Copper(II) Ion

(a) Comparative Example 1

An amidoxime chelating resin (trade name "Sumichelate® MC 900" manufactured by Sumika Chemtex Co., Ltd., 50 mg) was stirred in a copper(II) sulfate pentahydrate aqueous solution (10 mmol/L, 20 mL, pH 5, 0.1 M acetate buffer solution) at room temperature for 24 hours. The absorbance of the stirred solution at 765 nm was measured. From the obtained absorbance, a change in the concentration of the copper(II) sulfate pentahydrate aqueous solution was calculated. From the difference in the concentration of the copper(II) sulfate pentahydrate aqueous solution between before and after the stirring, the amount of copper(II) ion adsorbed by the amidoxime chelating resin was calculated. Table 4 provides the obtained results.

(b) Comparative Example 2

By using an iminodiacetatic acid chelating resin (trade name "Sumichelate® MC 700" manufactured by Sumika Chemtex Co., Ltd., 50 mg) in place of the amidoxime chelating resin, a change in the concentration of the copper(II) sulfate pentahydrate aqueous solution was calculated in the same manner as in (5)(a) above. From the difference in the concentration of the copper(II) sulfate pentahydrate aqueous solution between before and after the stirring, the amount of copper(II) ion adsorbed by the iminodiacetatic acid chelating resin was calculated. Table 4 provides the obtained results.

[TABLE 4]

| | Adsorption amount of copper(II) ion (mmol / g) |
|---|---|
| Comparative Example 1: amidoxime chelating resin | 1.72 |
| Comparative Example 2: iminodiacetic acid chelating resin | 1.48 |
| Example 2 | 5.14 |

As shown in Table 4, the amount of copper(II) ion adsorbed by the PAN-oxime porous body of the present invention was higher than that of the commercially available chelating resins.

Example 4

<Filter using Heat-Shrinkable Tube>

A PAN-oxime porous body (dimensions: a substantially cylindrical shape having a diameter of 8.0 mm and a thickness of 15 mm) was obtained in the same manner as in Example 3 except that a sample tube having a diameter of 8.0 mm was used in place of the one having a diameter of 15 mm. The PAN-oxime porous body was placed into a heat-shrinkable tube (made of polyethylene, size: inner diameter 8.8 mm, length 3.0 cm) and they were heated at 105°C for 15 minutes. The tube shrunk due to the heating, thus giving a filter accommodating the PAN-oxime porous body therein.

(1) Measurement of Adsorption Amount of Copper(II) Ion

A copper(II) sulfate pentahydrate aqueous solution (1.57 mmol/L, 5 mL, pH 5, 0.1 M acetate buffer solution) was passed through the filter accommodating the PAN-oxime porous body therein (SV 100 $hours^{-1}$). The amount of copper(II) ion present in the solution before and after passing through the filter was measured by ICP emission spectrometry. Table 5 provides the obtained results. Note that SV stands for Space Velocity and refers to a flow rate per unit time and volume of the porous body.

(2) Measurement of Adsorption Amount of Vanadium(V) Ion

A vanadium(V) oxide aqueous solution (1.96 mmol/L, 5 mL, pH 5, 0.1 M acetate buffer solution) was passed through the filter accommodating the PAN-oxime porous body therein (SV 100 $hours^{-1}$). The amount of copper(II) ion present in the filtered solution was measured by ICP emission spectrometry. Table 5 provides the obtained results.

[TABLE 5]

| Type of metal ion | Concentration of metal ion (ppm) | |
|---|---|---|
| | Before being filtered | After being filtered |
| Cu(II) | 92.7 | 0.100 |
| V(V) | 104.6 | < 0.001 |

As shown in Table 5, it was confirmed that the filter accommodating the PAN-oxime porous body of the present invention therein was capable of adsorbing a copper(II) ion and a vanadium(V) ion at high speed.

Industrial Applicability

Since the PAN-oxime porous body obtained by the method of the present invention has continuous pores and a thickness of 1 mm or more and is highly capable of adsorbing metal ions even in high speed processing, it is possibly applicable to filters, adsorbents, and the like.

## Claims

1. An amidoxime-modified polyacrylonitrile porous body obtained by reacting with hydroxylamine a polyacrylonitrile porous body that is monolithic, has a thickness of 1 mm or more and contains polyacrylonitrile as the main component to convert part of a nitrile group of the polyacrylonitrile porous body into an amidoxime group.

2. The amidoxime-modified polyacrylonitrile porous body according to claim 1, wherein the polyacrylonitrile porous body is obtained by a method comprising the steps of:

    obtaining a polyacrylonitrile solution by heating and dissolving polyacrylonitrile in a solvent;
    obtaining a product precipitated by cooling the polyacrylonitrile solution, and
    obtaining the polyacrylonitrile porous body that is monolithic, has a thickness of 1 mm or more and contains polyacrylonitrile as the main component by immersing the product in a different solvent to replace the solvent with the different solvent,

the solvent containing a poor solvent for polyacrylonitrile and a good solvent for polyacrylonitrile,
the poor solvent being one or more selected from the group consisting of water, acetonitrile, ethylene glycol, methanol, ethanol, isopropanol, ethylene glycol and glycerin, and
the good solvent being one or more selected from the group consisting of dimethyl sulfoxide, dimethyl formamide, dimethyl acetamide and N-methyl-pyrrolidone.

**3.** The amidoxime-modified polyacrylonitrile porous body according to claim 1 or 2, wherein an amount of nitrile group converted into amidoxime group is 0.1 to 20 mmol per g of the amidoxime-modified polyacrylonitrile porous body

**4.** The amidoxime-modified polyacrylonitrile porous body according to any one of claims 1 to 3, wherein the amidoxime-modified polyacrylonitrile porous body has pores having a pore diameter of 0.1 to 15 μm, the pores have a skeletal diameter of 0.05 to 8 μm, and the amidoxime-modified polyacrylonitrile porous body has a thickness of 1 mm or more and a BET area of 5 to 800 $m^2/g$.

**5.** The amidoxime-modified polyacrylonitrile porous body according to any one of claims 1 to 4, wherein the infrared absorption spectrum of the amidoxime-modified polyacrylonitrile porous body satisfies the following formula:

$$1.2 \leq (B) / (A) \leq 500$$

where (A) indicates the peak height of the infrared absorption spectrum of the amidoxime-modified polyacrylonitrile porous body at 2262 $cm^{-1}$, and (B) indicates the peak height of the infrared absorption spectrum of the amidoxime-modified polyacrylonitrile porous body at 1652 $cm^{-1}$.

**6.** The amidoxime-modified polyacrylonitrile porous body according to any one of claims 1 to 5 for adsorbing a metal ion and an iodine ion and iodine.

**7.** The amidoxime-modified polyacrylonitrile porous body according to claim 6, wherein the metal is selected from the group consisting of copper, iron, nickel, vanadium, indium, gallium, mercury, silver, lead, uranium, plutonium, cesium, barium, lanthanum, thallium and strontium.

**8.** The amidoxime-modified polyacrylonitrile porous body according to claim 6 or 7, wherein the amidoxime-modified polyacrylonitrile porous body adsorbs the metal ion and the iodine ion in an amount of 0.2 to 10 (ion mmol / g of porous body) and adsorbs the iodine in an amount of 0.2 to 10 (iodine mmol / g of porous body).

**9.** A column for adsorbing a metal ion and an iodine ion and iodine, wherein the column is filled with the amidoxime-modified polyacrylonitrile porous body according to any one of claims 1 to 5.

**10.** The column according to claim 9, wherein the metal is selected from the group consisting of copper, iron, nickel, vanadium, indium, gallium, mercury, silver, lead, uranium, plutonium, cesium, barium, lanthanum, thallium and strontium.

**11.** A metal adsorption method for adsorbing a metal ion and an iodine ion and iodine using the amidoxime-modified polyacrylonitrile porous body according to any one of claims 1 to 5.

**12.** The metal adsorption method according to claim 11, wherein the metal is selected from the group consisting of copper, iron, nickel, vanadium, indium, gallium, mercury, silver, lead, uranium, plutonium, cesium, barium, lanthanum, thallium and strontium.

**13.** A method for producing an amidoxime-modified polyacrylonitrile porous body, the method comprising the step of reacting with hydroxylamine a polyacrylonitrile porous body that is monolithic, has a thickness of 1 mm or more and contains polyacrylonitrile as the main component to convert part of a nitrile group of the polyacrylonitrile porous body into an amidoxime group.

**14.** The method according to claim 13, wherein the polyacrylonitrile porous body is obtained by a method comprising the steps of:

obtaining a polyacrylonitrile solution by heating and dissolving polyacrylonitrile in a solvent;
obtaining a product precipitated by cooling the polyacrylonitrile solution, and
obtaining the polyacrylonitrile porous body that is monolithic, has a thickness of 1 mm or more and contains polyacrylonitrile by immersing the product in a different solvent to replace the solvent with the different solvent, the solvent containing a poor solvent for polyacrylonitrile and a good solvent for polyacrylonitrile,
the poor solvent being one or more selected from the group consisting of water, acetonitrile, ethylene glycol, methanol, ethanol, isopropanol, ethylene glycol and glycerin, and
the good solvent being one or more selected from the group consisting of dimethyl sulfoxide, dimethyl formamide, dimethyl acetamide and N-methyl-pyrrolidone.

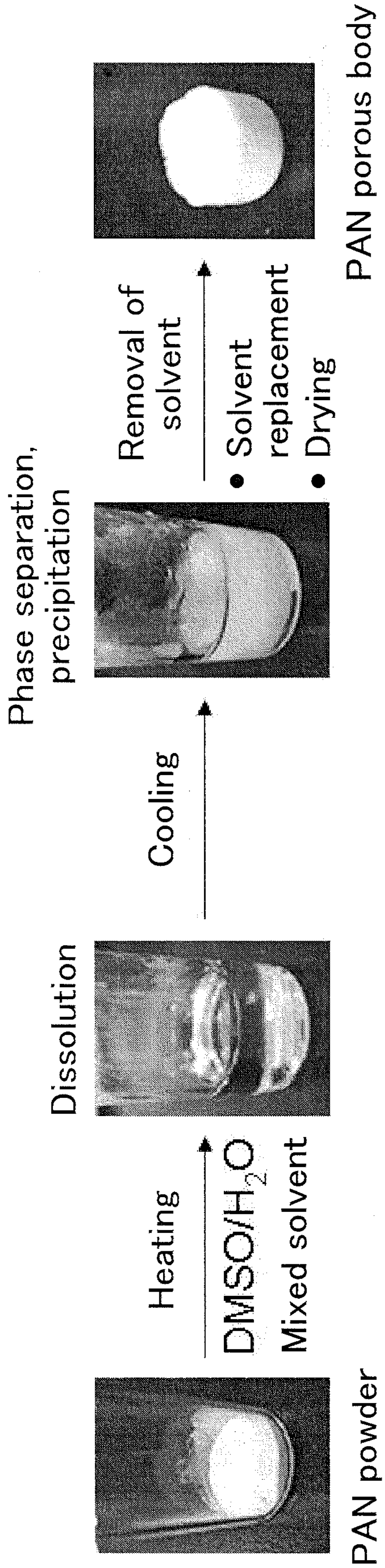
PAN powder
Heating
DMSO/$H_2O$
Mixed solvent
Dissolution
Cooling
Phase separation, precipitation
Removal of solvent
● Solvent replacement
● Drying
PAN porous body

FIG. 1

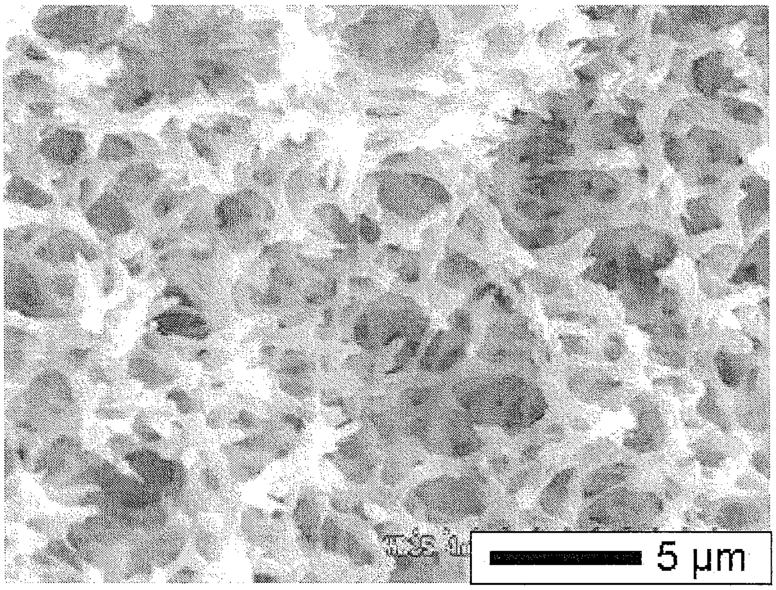


FIG. 2

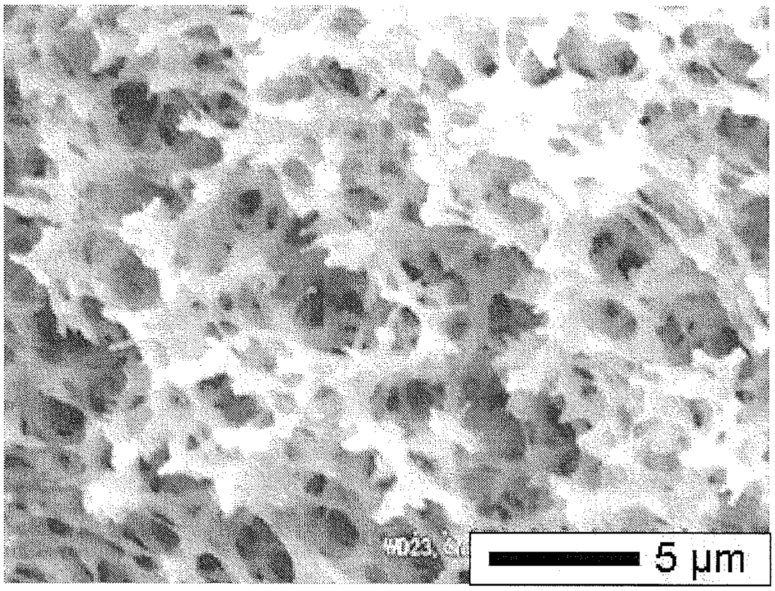


FIG. 3

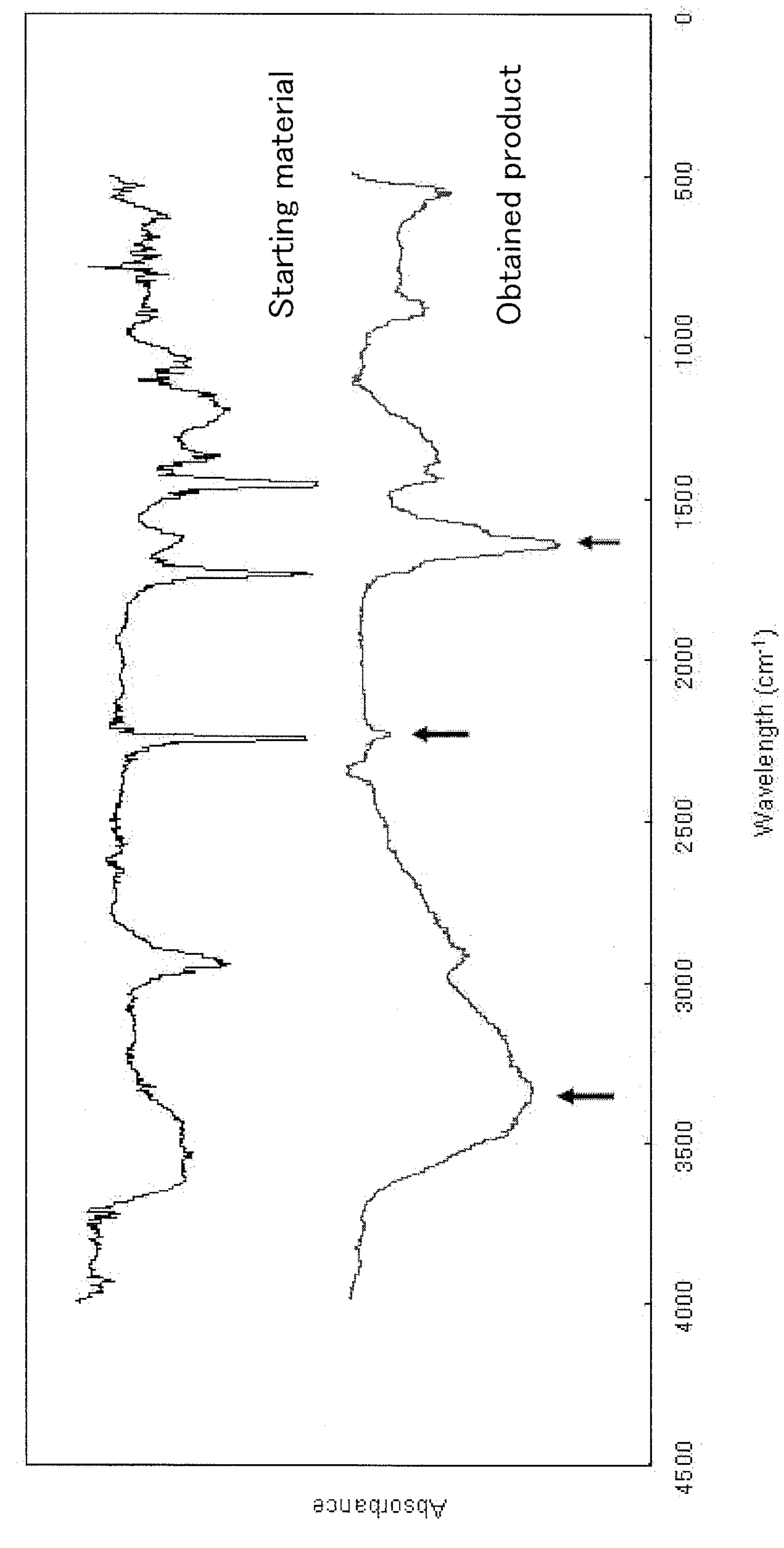
Starting material
Obtained product
Absorbance
Wavelength (cm-1)
0
500
1000
1500
2000
2500
3000
3500
4000
4500

FIG. 4

**INTERNATIONAL SEARCH REPORT**

International application No.
PCT/JP2011/070334

A. CLASSIFICATION OF SUBJECT MATTER
*C08J9/36*(2006.01)i, *B01J20/26*(2006.01)i, *B01J20/30*(2006.01)i, *C08J9/28*(2006.01)i

According to International Patent Classification (IPC) or to both national classification and IPC

B. FIELDS SEARCHED

Minimum documentation searched (classification system followed by classification symbols)
C08J9/36, B01J20/26, B01J20/30, C08J9/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-30017 A (Osaka University, Osaka Industrial Promotion Organization), 12 February 2009 (12.02.2009), claim 1; paragraphs [0023], [0029], [0030], [0070] to [0077], [0089], [0160], [0166] (Family: none) | 1,3-13<br>2,14 |
| Y<br>A | JP 63-166436 A (Sumitomo Chemical Co., Ltd.), 09 July 1988 (09.07.1988), page 1, right column, lines 2 to 10 (Family: none) | 1,3-13<br>2,14 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October, 2011 (05.10.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/070334

C (Continuation). DOCUMENTS CONSIDERED TO BE RELEVANT

| Category* | Citation of document, with indication, where appropriate, of the relevant passages | Relevant to claim No. |
|---|---|---|
| Y | JP 6-511197 A (Allied-Signal Inc.), 15 December 1994 (15.12.1994), page 7, upper right column, lines 2 to 9 & US 5494940 A & US 5502082 A & US 5525710 A & US 5541234 A & EP 625070 B1 & WO 1993/012877 A1 & WO 1995/012632 A2 & DE 69226203 C & DK 625070 T & ES 2118219 T & AT 168040 T | 9,10 |
| Y | JP 2002-517574 A (Waters Investments Ltd.), 18 June 2002 (18.06.2002), paragraph [0049] & US 2006/0021939 A1 & US 2007/0205156 A1 & US 2009/0139323 A1 & US 2010/0300972 A1 & US 2010/0324159 A1 & EP 1091981 B1 & WO 1999/064480 A1 & DE 69936920 D & AU 4437399 A | 9,10 |
| Y | JP 2007-182571 A (Massachusetts Institute of Technology), 19 July 2007 (19.07.2007), paragraph [0109] & US 2002/0155311 A1 & US 2003/0198825 A1 & EP 949959 B1 & WO 1998/008595 A2 & DE 69738823 D & AU 4646397 A & CA 2263582 A & AT 400352 T & AU 771431 B | 9,10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002194133 A
- JP H8199622934 B
- JP H41992261404 A


### Non-patent literature cited in the description


- **LIU, XIN et al.** *Journal of Hazardous Materials,* 2010, vol. 175, 1014-1021